# FASCICULE DE BREVET EUROPEEN

(11) **EP 1 417 997 B1**
(45) Date de publication et mention de la délivrance du brevet: **10.09.2008**
(21) Numéro de dépôt: 03292747.7
(22) Date de dépôt: 04.11.2003
(51) Int. Cl.: B01D 53/94

(54) **Dispositif de dépollution catalytique pour un moteur de véhicule automobile et procédé de production hydrogène associé**
Katalitische Reinigungsverfahren für einen Motor eines Kraftzeugs und zugehöriges Verfahren zur Wasserstofferzeugung
Catalytic depollution process for motor vehicle engine and associated process for hydrogen production

(30) Priorité: 07.11.2002 FR 0213959
(43) Date de publication de la demande: 12.05.2004
(73) Titulaire: RENAULT S.A.S., 92100 Boulogne Billancourt (FR)
(72) Inventeur: Baudel, Aurélien, 14123 Ifs (FR); Heurtaux, Fabien, 78000 Versailles (FR); Calvo, Sabine, 78340 Les Clayes sous Bois (FR); Klouz, Véronique, 78320 Le Mesnil Saint-Denis (FR)
(74) Mandataire: Cémeli, Eric Philippe Laurent

(56) Documents cités:
- EP-A- 0 537 968
- EP-A- 1 108 863
- US-A- 3 986 350
- US-A1- 2001 041 153
- PATENT ABSTRACTS OF JAPAN vol. 012, no. 292 (M-729), 10 août 1988 (1988-08-10) & JP 63 068714 A (MAZDA MOTOR CORP), 28 mars 1988 (1988-03-28)

## Description

La présente invention a pour objet la dépollution catalytique des gaz d'échappement d'un moteur à combustion interne de véhicule automobile. Elle a également pour objet un procédé de production et d'utilisation d'hydrogène dans un système embarqué sur un véhicule automobile équipé d'un moteur à combustion interne.

Les moteurs à combustion interne à allumage commandé dont le carburant est de l'essence, du gaz (gaz sous pression liquéfié GPL), ou du gaz naturel, ainsi que les moteurs à forte compression diesel dont le carburant est du gazole, ou du diméthyléther (DME) ou analogues, sont généralement équipés d'un système de dépollution des gaz d'échappement. On constate néanmoins que ces systèmes de dépollution sont très peu performants en termes de réactivité chimique des catalyseurs aux faibles températures et en particulier, à froid lors du démarrage du moteur. Cela entraîne une émission relativement importante de polluants pendant la phase de démarrage jusqu'à ce que la température ait atteint un niveau suffisamment élevé dans l'ensemble du système de dépollution.

Pour éviter cet inconvénient, il est possible d'augmenter la quantité de catalyseur et de métaux nobles utilisés, ce qui entraîne une augmentation du coût non négligeable. On peut également envisager de préchauffer le système de dépollution dès le démarrage du véhicule par exemple au moyen de résistances électriques. Dans ce cas cependant le rendement énergétique est faible. Il a été décrit, dans la demande de brevet WO 99/00 588, un procédé et un dispositif d'injection d'hydrogène en continu dans le convertisseur catalytique d'un système de dépollution afin d'améliorer la réduction et la combustion des composés polluants. La réaction de combustion de l'hydrogène sur l'oxygène étant très exothermique même à basse température dans le dispositif catalyseur, on obtient une montée en température rapide du système de dépollution comprenant le dispositif catalyseur et/ou un filtre à particules et ce, sans générer de polluant. L'amorçage des réactions de conversion catalytique se fait ainsi dès le démarrage du moteur. Selon l'enseignement de cette demande de brevet, l'hydrogène injecté est formé dans un dispositif électrolyseur monté en amont d'un réservoir de stockage. Il en résulte un système complexe et fragile, compte tenu de la présence du dispositif d'électrolyse, lequel entraîne en outre une consommation importante d'énergie électrique.

On pourrait envisager d'équiper le véhicule d'un réservoir d'hydrogène. Dans ce cas cependant, un tel réservoir serait particulièrement volumineux. De plus, le remplissage du réservoir nécessiterait l'existence d'un réseau de stations de remplissage totalement inexistant à l'heure actuelle.

On a également décrit dans le brevet US 5 599 758, l'utilisation d'hydrogène pour la régénération d'un système catalytique de dépollution, mais ce document ne précise pas la provenance de l'hydrogène utilisé.

La présente invention a pour objet la production d'hydrogène par des moyens simples et fiables embarqués sur le véhicule automobile, afin de permettre la dépollution catalytique des gaz d'échappement du moteur à combustion interne dont le véhicule automobile est équipé.

L'invention a également pour objet le préchauffage d'un système de dépollution des gaz d'échappement d'un moteur à combustion interne avec de l'hydrogène produit dans le véhicule lui-même, d'une manière simple et fiable, ainsi que diverses utilisations d'une partie de l'hydrogène produit, notamment pour alimenter une pile à combustible lorsqu'un tel dispositif est prévu dans le véhicule pour être associé au moteur thermique.

Le dispositif selon l'invention, de dépollution catalytique des gaz d'échappement d'un moteur à combustion interne de véhicule automobile, comprend un dispositif intégré pour la production d'hydrogène par reformage d'un carburant hydrocarboné.

Selon l'invention, on utilise la température élevée du dispositif de dépollution et la chaleur dégagée par les gaz d'échappement du moteur à combustion qui traversent le système de dépollution, pour améliorer le rendement thermique et énergétique d'un reformeur intégré dans le dispositif de dépollution lui-même, par exemple à l'intérieur d'un pot d'échappement catalytique. Le reformeur intégré utilise directement une partie de la chaleur des gaz d'échappement pour réaliser l'évaporation et le réchauffage des réactifs de reformage comprenant du carburant, de l'air et éventuellement de la vapeur d'eau.

Cette chaleur est également utilisée pour le reformage des hydrocarbures ou de composés hydrocarbonés oxygénés par une réaction de reformage fortement endothermique.

A cet effet, le dispositif comprend de préférence des moyens d'échange thermique entre les gaz d'échappement et le dispositif de production d'hydrogène.

Les moyens d'échange thermique sont adaptés à la circulation des réactifs de reformage en vue de leur réchauffage et/ou vaporisation avant la réaction de reformage.

Dans le cas d'un vaporeformage d'hydrocarbures oxygénés, alcools ou éthers, la réaction fortement endothermique est du type :

CₙHₘOₚ + H₂O → xCO + H₂

On peut aussi réaliser une réaction d'oxydation partielle des hydrocarbures contenus dans le carburant alimentant le moteur en utilisant de l'air qui peut provenir par exemple d'une partie de l'air sous pression disponible à la sortie du turbocompresseur d'admission d'air du moteur du véhicule. La réaction exothermique est du type :

CₙHₘ + (n + m/2)O₂ → (m/2)H₂O

On peut également injecter de l'eau dans la zone où se produit cette réaction afin de réaliser à la fois un vaporeformage et une oxydation partielle. Les proportions peuvent être choisies en fonction de la quantité de chaleur récupérée sur le système catalytique en provenance des gaz d'échappement et la température du système de dépollution. Dans certains cas, on peut être proche des conditions d'équilibre thermique du reformeur qui opère alors en mode dit « autothermal ».

Le mélange gazeux produit dans le reformeur ou reformat peut être partiellement reconverti dans des moyens annexes de purification de l'oxyde carbone.

Le dispositif comprend de préférence dans ce but, des moyens intégrés de conversion d'oxyde de carbone, montés en aval du dispositif de production d'hydrogène. De tels moyens de conversion peuvent être à haute température ou à basse température ou encore avec injection d'eau selon une réaction exothermique du type :

CO + H₂O → CO₂ +H₂

On peut également envisager une réaction d'oxydation préférentielle (PROX) du type :

CO + 0.5 O₂ → CO₂

H₂ + 0.5 O₂ → H₂O

On peut également purifier le mélange gazeux en le faisant passer sur une membrane de séparation des gaz 27a, ou purifier les gaz par un procédé d'absorption sous pression.

Le choix du mode de purification et de traitement du mélange gazeux produit dépend de l'utilisation envisagée pour l'hydrogène.

Si le système de dépollution présente une température trop basse pour réaliser la réaction de reformage dans de bonnes conditions malgré la chaleur fournie par les gaz d'échappement en fonctionnement continu, on peut prévoir en outre un dispositif de brûleur intégré monté en amont ou autour du dispositif de production d'hydrogène afin d'augmenter la température du carburant à l'entrée de la zone de reformage.

Le même effet peut être obtenu au moyen de résistances électriques de chauffage convenablement disposées.

Un réservoir de stockage de l'hydrogène produit, est de préférence prévu et monté à l'extérieur du système catalytique.

Le dispositif comprend avantageusement un capteur de la température interne fournissant un signal à une unité de commande et une électrovanne pilotée par l'unité de commande pour injecter dans le dispositif de dépollution catalytique, des quantités contrôlées du mélange gazeux riche en hydrogène se trouvant dans le réservoir, pendant les phases de démarrage à froid afin de réchauffer le dispositif par réaction avec l'oxygène de l'air.

Le procédé de production et d'utilisation d'hydrogène selon l'invention est mis en oeuvre avantageusement dans un système embarqué de véhicule automobile équipé d'un moteur à combustion interne alimenté en carburant et en air. Un mélange gazeux riche en hydrogène est produit par une réaction de reformage effectuée au sein du dispositif de dépollution catalytique des gaz d'échappement dont le véhicule est équipé et à partir de carburant, par exemple le carburant alimentant le moteur du véhicule, avec éventuellement adjonction d'eau, les réactifs étant préalablement réchauffés et/ou vaporisés par échange thermique avec les gaz d'échappement, au sein du dispositif de dépollution catalytique.

Dans un mode de mise en oeuvre avantageux, on élève la température régnant au sein du dispositif de dépollution catalytique en procédant à une combustion préalable de carburant en mélange avec de l'air, les gaz issus de cette combustion étant ensuite traités par le dispositif de dépollution catalytique.

On peut convertir au moins en partie l'oxyde de carbone produit lors de la réaction de reformage par un traitement ultérieur approprié.

On injecte de préférence dans le dispositif de dépollution catalytique, pendant les phases de démarrage à froid, des quantités contrôlées du mélange gazeux riche en hydrogène préalablement produit, afin de réchauffer le dispositif par réaction avec l'oxygène de l'air et/ou afin d'améliorer la dépollution et/ou la régénération du dispositif de dépollution catalytique

On peut également injecter dans le moteur, des quantités contrôlées du mélange gazeux riche en hydrogène préalablement produit, afin d'améliorer la combustion.

Enfin, on peut injecter une partie du mélange gazeux riche en hydrogène préalablement produit dans une pile à combustible dont le véhicule est équipé.

L'invention sera mieux comprise à l'étude d'un mode de réalisation décrit à nullement limitatif décrit ci-après et illustré par les dessins annexés sur lesquels :
- la figure 1 représente schématiquement l'ensemble des éléments d'un moteur à combustion interne de véhicule automobile équipé d'un dispositif intégré de production d'hydrogène selon l'invention ;
- la figure 2 est une vue agrandie en coupe du dispositif de dépollution catalytique des gaz d'échappement intégrant un dispositif de vaporéformage ;
- la figure 3 est une vue en coupe selon 3.3 de la figure 2 ; et
- la figure 4 est une vue en coupe d'une variante de réalisation du dispositif de dépollution catalytique avec reformage autothermique.

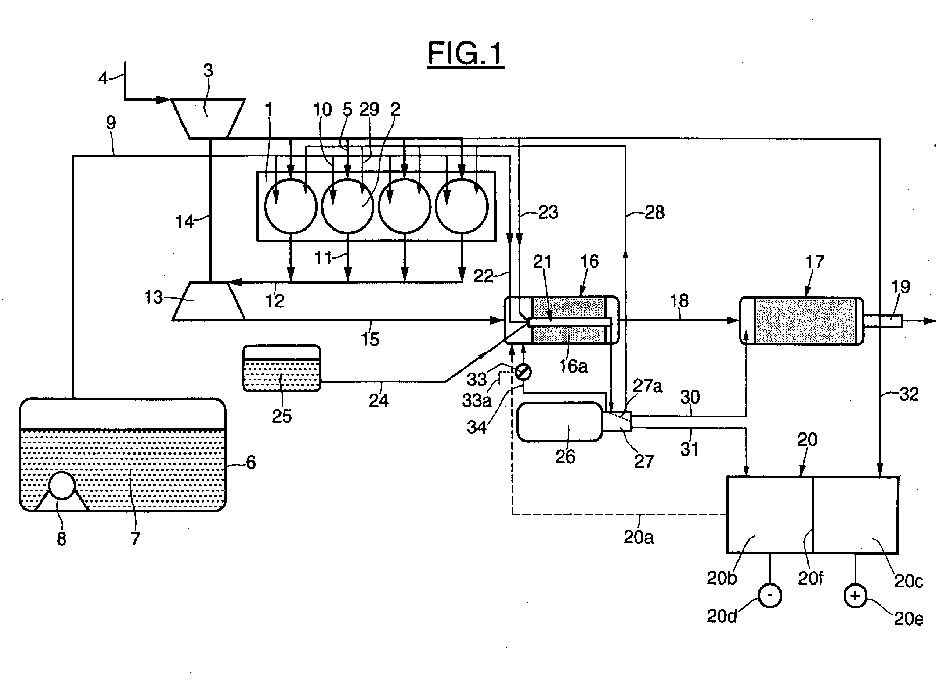

Comme il est illustré sur la figure 1, le moteur à combustion interne 1 comprend quatre cylindres 2 représentés schématiquement. Un turbocompresseur 3 alimenté en air par la conduite 4 alimente en air comprimé les tubulures d'admission 5 des différents cylindres 2.

Le véhicule est également équipé d'un réservoir 6 contenant un carburant hydrocarboné 7. Une pompe immergée 8 alimente en carburant par la conduite 9 les différentes tubulures d'admission ou les injecteurs 10 de chaque cylindre 2. Les tubulures d'échappement 11 sont reliées à une conduite commune 12 qui alimente une turbine de détente 13 montée sur un arbre commun 14 avec le turbocompresseur 3. La détente des gaz d'échappement dans la turbine 13 permet de manière classique d'entraîner le turbocompresseur 3. A la sortie de la turbine 13, les gaz d'échappement véhiculés par la canalisation 15 traversent un dispositif de dépollution catalytique qui comprend un pot d'échappement catalytique 16 et, dans l'exemple illustré, un filtre à particules 17 monté en aval du pot catalytique 16 et relié à ce dernier par la conduite 18. Après traitement dans le pot catalytique 16 et le filtre à particules 17, les gaz d'échappement s'échappent dans l'atmosphère par le tube 19.

Dans l'exemple illustré sur la figure 1, le véhicule automobile est en outre équipé d'une pile à combustible 20. La pile à combustible 20 est alimentée en hydrogène par une canalisation 31 du côté anodique 20b et en air par une canalisation 32 du côté cathodique 20c. Les côtés anodiques et cathodiques sont séparés par une membrane PEM ("Proton Exchange Membrane", en anglais) activée contenant du platine 20f. Le courant ainsi produit est récupéré par des collecteurs 20d et 20e.

Le pot catalytique 16 comprend un dispositif de production d'hydrogène 21 intégré monté à l'intérieur même du catalyseur 16a et placé de façon à pouvoir être réchauffé par les gaz d'échappement qui traversent le pot catalytique 16.

Le dispositif de production d'hydrogène 21 reçoit du carburant en provenance du réservoir 6 par la canalisation 22 connectée à la canalisation 9. Le dispositif de production d'hydrogène 21 reçoit également de l'air comprimé par la conduite 23 et de l'eau par une conduite 24 reliée à un réservoir d'eau 25 dont est équipé le véhicule.

Le mélange riche en hydrogène issu du dispositif de production d'hydrogène 21 est amené dans un réservoir tampon 26 en traversant un distributeur 27 capable de répartir convenablement et selon les besoins, le mélange riche en hydrogène produit. Une partie de ce mélange peut ainsi être amenée par la conduite 28 dans les cylindres 2 du moteur à combustion 1 par l'intermédiaire des tubulures d'admission 29 de façon à améliorer la combustion et le rendement du moteur 1. Une autre partie du mélange riche en hydrogène produit peut être dirigée par le distributeur 27 via la conduite 30 dans le filtre à particules 17 afin de le régénérer périodiquement. Enfin, une autre partie du mélange riche en hydrogène peut être amenée par le distributeur 27 via la conduite 31 dans la pile à combustible 20 qui reçoit par ailleurs par la conduite 32 l'oxygène nécessaire à la réaction et contenu dans l'air comprimé issu du turbocompresseur 3. Le distributeur 27 peut être piloté par une unité de commande non représentée sur la figure. Le distributeur 27 peut intégrer une membrane 27a de purification de l'hydrogène. La pile à combustible peut être de tout type classique, par exemple du type à membranes échangeuses de protons (PEM : Proton Exchange Membrane) ou du type à oxyde solide (SOFC: Solid Oxyde Fuel Cell). La pile à combustible 20 peut par exemple fournir de l'électricité au véhicule à la place ou en plus d'un alternateur non représenté sur la figure, couplé au moteur à combustion 1. L'excédent d'hydrogène apparaissant à l'extrémité anodique de la pile 20 peut être renvoyé par la conduite 20a représentée en tirets sur la figure, vers l'entrée du pot catalytique 16 afin d'en améliorer le fonctionnement en température du système catalytique.

Le mélange riche en hydrogène produit par reformage dans le dispositif 21 est obtenu sous pression. La pression de sortie peut varier de quelques bars à une centaine de bars dans le cas d'un vaporeformage et être de l'ordre de 1,1 à 5 bars dans le cas d'une oxydation partielle des gaz produits. Le mélange de reformat riche en hydrogène peut être stocké provisoirement dans le réservoir tampon 26, lequel est ensuite capable de libérer les gaz ainsi stockés lors d'une phase de démarrage du véhicule automobile afin de préchauffer le système de dépollution 16 dans sa partie amont. A cet effet, une vanne commandée 33 pilotée par l'unité de commande non représentée via la connexion 33a, est interposée dans une conduite 34 reliant le réservoir tampon 26 à la partie amont du pot catalytique 16.

L'hydrogène produit peut également être utilisé pour procéder périodiquement à la régénération du pot catalytique 16 ou du filtre à particules 17.

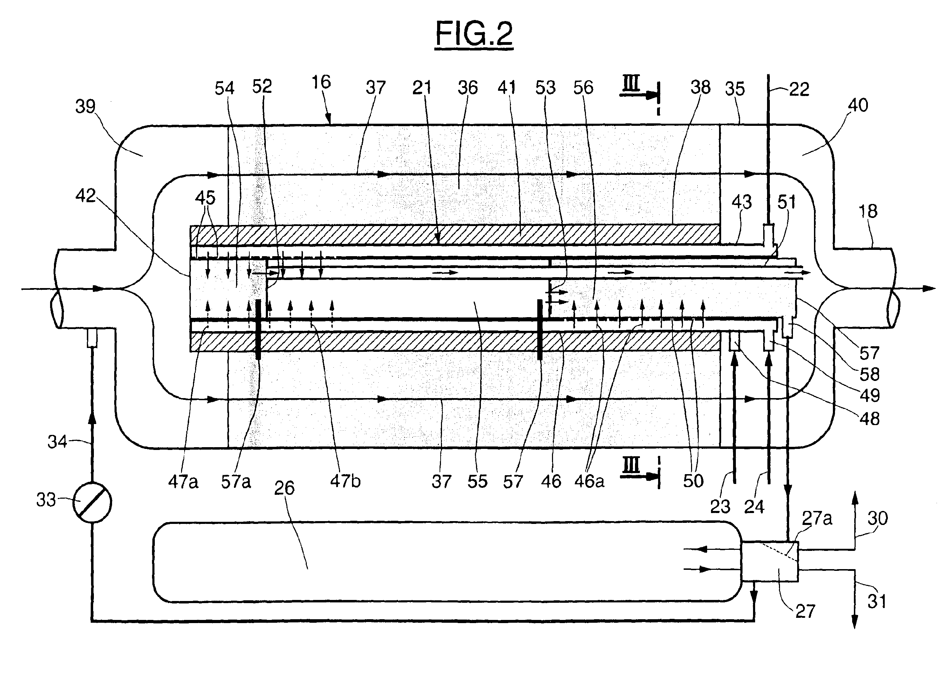

La figure 2 illustre une première variante du pot catalytique 16 adaptée à l'utilisation avec un moteur à forte compression diesel utilisant un carburant diesel (gazole) ou un diméthyléther. La température minimum de vaporeformage est alors d'environ 450 °C, ce qui est relativement élevé par rapport à la température moyenne des gaz d'échappement à l'entrée du pot catalytique 16 (d'environ 200 °C à 400 °C). Afin d'élever la température, on utilise alors avantageusement une réaction d'oxydation partielle fortement exothermique avec l'air provenant du turbocompresseur 3 ou, en variante, d'un ventilateur externe.

Lors de la phase de démarrage, l'hydrogène provenant du réservoir tampon 26 est amené, par l'intermédiaire de la vanne 33, à l'entrée du pot catalytique 16. L'hydrogène se mélange aux gaz d'échappement provenant de la combustion dans le moteur. En règle générale, et notamment dans le cas d'un moteur diesel, fonctionnant en surstoechiométrie, les gaz d'échappement contiennent une proportion non négligeable d'oxygène. Cet oxygène peut donc réagir avec l'hydrogène de façon à élever très rapidement la température et assurer ainsi, dès le démarrage du véhicule, la température optimum pour la dépollution catalytique. Dans le cas où les gaz d'échappement ne contiennent pas suffisamment d'oxygène, on peut envisager d'injecter de l'air dans la conduite d'échappement en amont du pot catalytique 16 de façon à augmenter la quantité d'oxygène dans les gaz d'échappement.

Le pot catalytique 16 est constitué d'une enveloppe généralement cylindrique 35 à l'intérieur de laquelle est logé un élément catalyseur 36 comprenant par exemple un monolithe catalytique capable de transformer les gaz polluants. Les gaz d'échappement traversent le catalyseur comme cela est schématisé par les flèches 37 sur la figure 2. Les gaz d'échappement après traitement sortent par la tubulure 18.

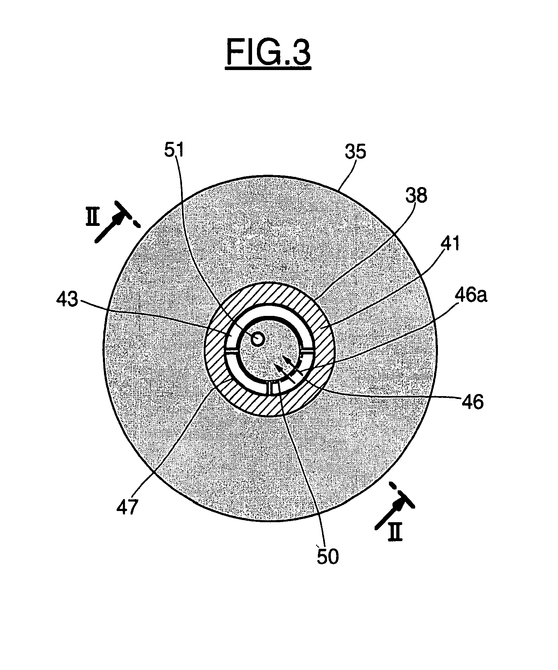

Un premier tube 38 est monté à l'intérieur du catalyseur 36 de manière concentrique à l'enveloppe cylindrique 35 et sur une partie de la longueur de cette dernière de façon à laisser libre en amont une chambre d'admission 39 et en aval une chambre d'échappement 40, les deux chambres étant traversées par les gaz d'échappement. Un matériau isolant plus ou moins d'épaisseur variable 41 tapisse la totalité de la paroi interne du tube 38 selon la température moyenne des gaz d'échappement et le type de carburant et reformeur utilisé. Le tube 38 est fermé par une paroi de fermeture 42 du côté amont, c'est-à-dire faisant face à la chambre d'admission 39. Une conduite semi-cylindrique 43 est montée à l'intérieur du revêtement isolant 41 et sur toute la longueur du tube 38 jusqu'à déboucher à l'extérieur dans la chambre d'échappement 40. La conduite 43 est reliée à la canalisation 22 et peut donc amener du carburant provenant du réservoir de carburant 6 jusqu'à l'intérieur du dispositif de production d'hydrogène 21 intégré au pot catalytique 16. La conduite semi-cylindrique 43 dont la forme est visible en particulier sur la figure 3 présente sur une portion de sa longueur, au voisinage de son extrémité proche de la paroi de fermeture 42, des perforations 45 jouant le rôle de buses d'injection de carburant.

Egalement disposées à l'intérieur de l'isolant 41, se trouvent montées deux conduites hémicylindriques 46 et 47 visibles en particulier sur la figure 3. Les conduites 46 et 47 s'étendent sur toute la longueur du tube 38 et font saillie à l'extérieur de ce dernier dans la chambre d'échappement 40. A cet endroit, la conduite 46 communique par la tubulure d'entrée 48 avec la conduite 23 reliée à la sortie en air comprimé du turbocompresseur 3. La conduite 47 présente, uniquement au voisinage de son extrémité proche de la paroi de fermeture 42, des perforations jouant le rôle de buses d'injection pour l'air en direction de l'axe du dispositif selon les flèches 47a et 47b. La conduite 47 s'étend également sur la longueur du tube 38 et fait saillie dans la chambre d'échappement 40. A cet endroit elle est reliée par la tubulure 49 à la conduite 24 reliée au réservoir d'eau 25. La conduite 46 visible sur la figure 3 comporte, dans sa portion située du côté de la chambre d'échappement 40, une pluralité de perforations 50 qui jouent le rôle de buses pour l'injection de vapeur d'eau en direction de l'axe longitudinal du dispositif selon les flèches 46a. Un tube interne 51 est monté, dans l'exemple illustré, de manière désaxée, à l'intérieur du logement cylindrique, défini par les conduites 43, 46 et 47. Mais plusieurs tubes 51 peuvent être utilisés.

Dans l'exemple illustré, le dispositif de production d'hydrogène 21 comprend trois zones délimitées par la paroi interne perforée 53 et la paroi pleine 52.

Du côté de la paroi de fermeture 42, c'est-à-dire du côté de la chambre d'admission 39, en amont de la circulation des gaz d'échappement, se trouve une première zone 54 qui joue le rôle d'un brûleur et qui peut contenir à cet effet par exemple un matériau catalytique adapté du type monolithe. La deuxième zone ou zone centrale 55 est celle dans laquelle se produit le reformage du carburant amené par les canalisations 22, 43. Enfin, la troisième zone référencée 56 placée du côté de la chambre d'échappement 40 est celle dans laquelle se produit la conversion de l'oxyde de carbone produit dans la zone de reformage précédente 55. La zone 56 est fermée par une cloison d'extrémité 57 qui est cependant traversée par le tube 51.

En fonctionnement, les gaz d'échappement traversant le monolithe catalytique 36 sont capables de transférer de la chaleur à travers la paroi isolante 41 dont l'épaisseur et les caractéristiques sont choisis pour l'obtention de la température souhaitée de façon à réchauffer le carburant provenant de la canalisation 22 et s'écoulant dans la conduite semi-cylindrique 43. De la même manière, les gaz d'échappement réchauffent l'air comprimé provenant de la conduite 23 et s'écoulant dans la canalisation hémicylindrique 47. Le carburant injecté par les perforations 45 de la conduite 43 et l'oxygène de l'air comprimé pénétrant par les perforations de la conduite 47 selon les flèches 47a se mélangent dans la zone de brûleur 54 et réagissent par une réaction fortement exothermique jusqu'à atteindre une température convenable pour la réaction de reformage. Les gaz de combustion issus de la zone du brûleur 54 s'échappent par le tube 51 en transférant de la chaleur au compartiment 55 et rejoignent les gaz d'échappement sur la sortie 18 du pot catalytique 16.

Dans la zone 55, le carburant provenant de la conduite 22 et amené par la canalisation semi-cylindrique 43 est injecté par les perforations 45 au même titre que l'air comprimé contenant l'oxygène provenant de la conduite 23 et alimenté par la canalisation semi-cylindrique 47. Les flèches 47b symbolisent cette alimentation en oxygène dans la zone de reformage 55. On peut envisager également de prévoir à cet endroit des perforations sur la conduite hémicylindrique 46 de façon à injecter de la vapeur d'eau dans la zone de reformage 55 pour effectuer un vaporeformage en même temps qu'une oxydation partielle d'hydrocarbures. La présence de la zone 54 jouant le rôle de brûleur permet d'élever la température à un niveau suffisant pour réaliser la réaction de reformage dans de bonnes conditions. L'amorçage de la réaction de combustion dans la zone de brûleur 54 peut être automatique en raison d'une température suffisamment élevée du monolithe catalytique ou au contraire résulter d'une action extérieure commandée telle qu'une étincelle ou décharge électrique. En variante on peut supprimer la zone de brûleur 54 si la température atteinte par le passage des gaz d'échappement est suffisante pour le reformage approprié.

Les gaz issus de la zone de reformage 55 traversent ensuite la zone 56 dans laquelle l'oxyde de carbone formé peut être converti en totalité ou en partie par une réaction d'oxydation préférentielle ou une réaction du type WGS (Water Gaz Shift) qui peut avoir lieu sur un lit catalytique. L'eau provenant de la conduite 24 est vaporisée par la canalisation hémicylindrique 46 peut être injectée à cet effet dans la zone 56 par les buses ou perforations 50.

Un capteur de température 57 est monté sur la portion aval de la zone de reformage 55 afin de pouvoir contrôler la température de la réaction et d'agir s'il y a lieu sur les différentes alimentations pour maintenir la température au niveau souhaité. Un capteur de température 57a peut être rajouté pour optimiser plus précisément la température du brûleur et la consommation de carburant.

Le reformat, après conversion de l'oxyde de carbone comme il vient d'être dit, est extrait par la tubulure de sortie 58 et amené jusqu'au réservoir tampon 26 par l'intermédiaire du distributeur 27. Ce mélange riche en hydrogène peut être conservé sous pression dans le réservoir tampon 28 sous forme gazeuse ou encore sous la forme d'hydrures métalliques contenues dans le réservoir 26, ce qui permet alors d'en réduire le volume.

Comme il a été dit précédemment, l'hydrogène ainsi stocké dans le réservoir tampon 26 peut servir, par ouverture commandée de la vanne 33, au moment du démarrage du véhicule, à réchauffer suffisamment les gaz d'échappement pour que la dépollution catalytique se fasse convenablement dès le démarrage du véhicule. Le mélange riche en hydrogène produit peut également être utilisé, comme il a été dit précédemment, pour la régénération du dispositif de dépollution, pour améliorer la combustion du moteur ou encore pour alimenter une pile à combustible comme cela est illustré sur la figure 1.

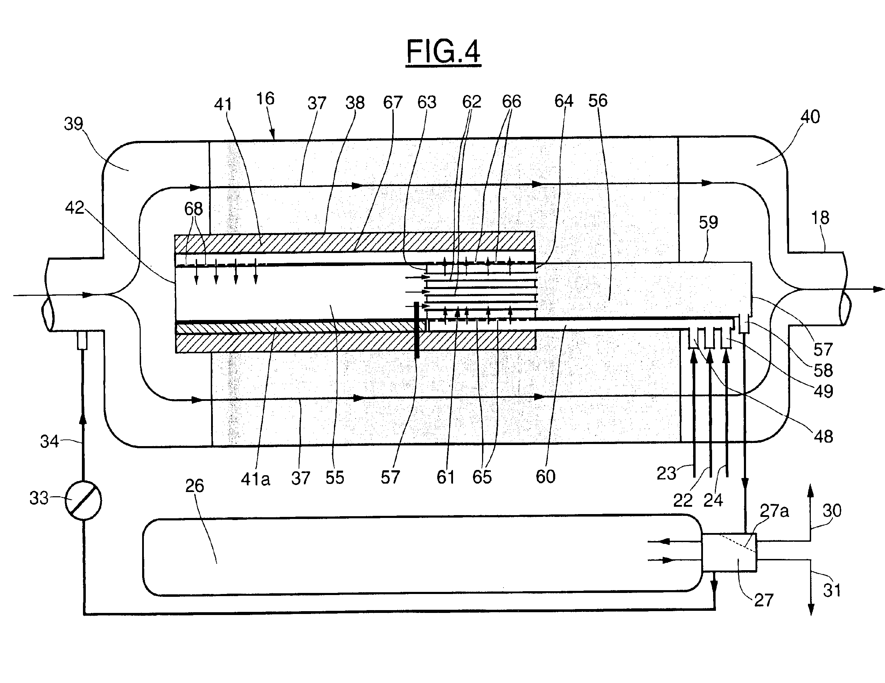

La variante illustrée sur la figure 4 est adaptée à un fonctionnement de reformage autothermal ne nécessitant pas l'existence d'une zone de brûleur comme dans la variante illustrée sur la figure 2. Dans le mode de réalisation illustré sur la figure 4 où les mêmes éléments portent les mêmes références, le tube 38 s'étend sur une partie de la longueur de l'élément catalytique 36. Le tube interne 59 qui est fermé à ses deux extrémités par les cloisons 57 et 42 est entouré par une canalisation hémicylindrique 60 sur une partie de sa longueur, la canalisation 60 faisant saillie dans la chambre d'échappement 40. A cet endroit la canalisation 60 comporte des tubulures d'entrée reliées à l'arrivée de carburant 22, à l'arrivée d'air comprimé 23 et à l'arrivée d'eau 24, un manchon hémicylindrique isolant 41a complète l'entourage du tube 59 dans la partie amont dénuée de canalisation 60.

Le tube interne 59 comprend la zone de reformage 55 qui est placée en amont, une zone centrale d'échange de chaleur 61 et la zone 56 de conversion d'oxyde de carbone du côté aval, c'est-à-dire du côté de la chambre d'échappement 40. Dans la zone d'échange de chaleur 61 sont disposées dans l'exemple illustré, des portions de tube 62 montées longitudinalement selon l'axe du dispositif.

Les tubes 62 sont montés entre deux parois 63 et 64 qui assurent leur liaison et leur cohésion. Les gaz issus de la zone de reformage 55 constituant le reformat peuvent traverser l'intérieur des tubes 62 et déboucher ainsi dans la zone de conversion 56 contenant un monolithe catalytique.

La canalisation hémicylindrique 60 présente sur sa périphérie interne, dans la zone correspondant à la zone d'échange de chaleur 61, des perforations 65 qui permettent au mélange de carburant, d'air et de vapeur d'eau de passer entre les tubes 62 en s'échauffant au contact de leur paroi externe. Le mélange gazeux ainsi réchauffé peut alors pénétrer par des perforations 66 dans une portion de canalisation hémicylindrique 67 montée autour du tube interne 59. La canalisation 67 comporte en outre, dans la zone amont proche de la chambre d'admission 39 et de la cloison de fermeture 42, une pluralité de perforations 68 jouant le rôle de buses d'injection, à travers lesquelles le mélange gazeux ainsi porté à haute température peut pénétrer dans la portion amont de la zone de reformage 55. Ce mélange subit alors le reformage compte tenu de l'élévation de sa température donnant lieu à la production d'hydrogène selon les réactions mentionnées précédemment.

La conversion de l'oxyde de carbone se fait comme indiqué pour la variante de la figure 2 dans la zone de conversion 56.

La variante illustrée sur la figure 4 est particulièrement adaptée au cas d'un moteur à combustion interne à allumage commandé utilisant comme carburant de l'essence, du gaz de pétrole GPL liquéfié, du gaz naturel, du méthanol, de l'éthanol ou un mélange de ces constituants. La température moyenne des gaz d'entrée du pot catalytique est alors plus élevée (de l'ordre de 400 °C) de sorte que les conditions autothermiques peuvent être utilisées pour le reformage. Si la température est proche ou supérieure à la température de reformage, on utilise un vaporeformage comme expliqué en référence à la figure 2 qui permet la production d'un reformat riche en hydrogène. La réduction de la zone de brûleur prévue dans la variante illustrée sur la figure 2 permet d'économiser le carburant supplémentaire pour la production de l'énergie nécessaire au reformage. L'autoreformage ou l'oxydation partielle réalisés dans la zone de reformage 55 de la figure 4, consomment plus de carburant et d'air que le vaporeformage.

Selon le débit requis en hydrogène formé, on choisira de manière appropriée les dimensions du dispositif de production d'hydrogène dont la capacité pourra varier de 10 ml à quelques litres.

Bien que l'on ait illustré l'utilisation pour le reformage du carburant normal du véhicule alimentant déjà le moteur à combustion, on pourra envisager d'utiliser un composé différent pour produire de l'hydrogène dans les mêmes conditions et pour les mêmes utilisations. De tels composés pourront être des carburants se réformant facilement à faible température comme le méthanol ou présentant moins de dioxyde de carbone après reformage (du type GPL, diméthyléther, éthanol, ammoniaque ou analogue.).

Dans tous les cas, l'invention permet d'utiliser la chaleur des gaz d'échappement pour réaliser le reformage dans un système intégré au pot catalytique afin de produire de l'hydrogène contenu dans un mélange de reformat. Le rendement de production d'hydrogène est particulièrement élevé grâce à la récupération d'une partie de la chaleur nécessaire au reformage du carburant. L'air et le carburant nécessaires sont de préférence fournis au système reformeur par les canalisations déjà présentes dans le véhicule ne nécessitant ainsi aucune installation particulière. Les gaz réinjectés ou évacués du système reformeur sont dépollués par le système catalytique déjà présent et associé au moteur à combustion interne.

## Revendications

1. Dispositif de dépollution catalytique des gaz d'échappement d'un moteur à combustion interne (1) de véhicule automobile **caractérisé par le fait qu'**il comprend un dispositif intégré monté à l'intérieur du pot catalytique (16) (21) pour la production d'hydrogène par reformage d'un carburant hydrocarboné.

2. Dispositif selon la revendication i **caractérisé par le fait qu'**il comprend des moyens d'échange thermique entre les gaz d'échappement et le dispositif de production d'hydrogène.

3. Dispositif selon la revendication 1 **caractérisé par le fait que** les moyens d'échange thermique sont adaptés à la circulation des réactifs de reformage en vue de leur réchauffage et/ou vaporisation avant la réaction de reformage.

4. Dispositif selon l'une quelconque des revendications précédentes **caractérisé par le fait qu'**il comprend des moyens intégrés (56) de conversion d'oxyde de carbone, montés en aval du dispositif de production d'hydrogène.

5. Dispositif selon l'une quelconque des revendications précédentes **caractérisé par le fait qu'**il comprend un dispositif de brûleur intégré (54) monté en amont ou autour du dispositif de production d'hydrogène.

6. Dispositif selon les revendications 4 et 5 **caractérisé par le fait qu'**il comprend une enveloppe généralement cylindrique (35) à l'intérieur de laquelle est logé un élément catalyseur (36), et que le dispositif intégré (21) de production d'hydrogène comprend un tube monté à l'intérieur de l'élément catalyseur et délimitant une zone jouant un rôle de brûleur, une zone de reformage de carburant et une zone de conversion de l'oxyde de carbone produit dans la zone de reformage.

7. Dispositif selon l'une quelconque des revendications précédentes **caractérisé par le fait qu'**il comprend un réservoir (26) de stockage de l'hydrogène produit, monté à l'extérieur.

8. Dispositif selon la revendication 7 **caractérisé par le fait qu'**il comprend un capteur (57) de la température interne fournissant un signal à une unité de commande et une électrovanne (33) pilotée par l'unité de commande pour injecter dans le dispositif de dépollution catalytique, des quantités contrôlées du mélange gazeux riche en hydrogène se trouvant dans le réservoir, pendant les phases de démarrage à froid afin de réchauffer le dispositif par réaction avec l'oxygène de l'air.

9. Procédé de production et d'utilisation d'hydrogène dans un système embarqué de véhicule automobile équipé d'un moteur à combustion interne (1) alimenté en carburant et en air, **caractérisé par le fait qu'**un mélange gazeux riche en hydrogène est produit par une réaction de reformage effectuée au sein du dispositif (16) de dépollution catalytique des gaz d'échappement dont le véhicule est équipé et à partir du carburant alimentant le moteur du véhicule avec éventuellement adjonction d'eau, les réactifs étant préalablement réchauffés et/ou vaporisés par échange thermique avec les gaz d'échappement, au sein du dispositif de dépollution catalytique.

10. Procédé selon la revendication 9, **caractérisé par le fait qu'**on élève la température régnant au sein du dispositif de dépollution catalytique en procédant à une combustion préalable de carburant en mélange avec de l'air, les gaz issus de cette combustion étant ensuite traités par le dispositif de dépollution catalytique.

11. Procédé selon l'une des revendications 9 ou 10 **caractérisé par le fait qu'**on convertit au moins au partie l'oxyde de carbone produit lors de la réaction de reformage.

12. Procédé selon l'une quelconque des revendications précédentes **caractérisé par le fait qu'**on injecte dans le dispositif de dépollution catalytique, des quantités contrôlées du mélange gazeux riche en hydrogène préalablement produit, pendant les phases de démarrage à froid afin de réchauffer le dispositif par réaction avec l'oxygène de l'air.

13. Procédé selon l'une quelconque des revendications précédentes **caractérisé par le fait qu'**on injecte dans le moteur, des quantités contrôlées du mélange gazeux riche en hydrogène préalablement produit, afin d'améliorer la combustion.

14. Procédé selon l'une quelconque des revendications précédentes **caractérisé par le fait qu'**on injecte dans le dispositif de dépollution catalytique, des quantités contrôlées du mélange gazeux riche en hydrogène préalablement produit, afin d'améliorer la dépollution et/ou la régénération du dispositif de dépollution catalytique.

15. Procédé pour un véhicule équipé d'une pile à combustible, selon l'une quelconque des revendications précédentes **caractérisé par le fait qu'**on injecte dans la pile à combustible une partie du mélange gazeux riche en hydrogène préalablement produit.

## Claims

1. Device for the catalytic pollution control of the exhaust gases of a motor vehicle internal combustion engine (1), **characterized in that** it comprises an integrated device (21), mounted inside the catalytic converter (16), for producing hydrogen by reforming a hydrocarbon fuel.

2. Device according to Claim 1, **characterized in that** it comprises heat exchange means for exchanging heat between the exhaust gases and the hydrogen-producing device.

3. Device according to Claim 1, **characterized in that** the heat exchange means are designed to circulate reforming reagents so as to heat and/or vaporize them prior to the reforming reaction.

4. Device according to any one of the preceding claims, **characterized in that** it comprises integrated means (56) of converting carbon monoxide, these means being mounted downstream of the hydrogen-producing device.

5. Device according to any one of the preceding claims, **characterized in that** it comprises an integrated burner device (54) mounted upstream of or around the hydrogen-producing device.

6. Device according to Claims 4 and 5, **characterized in that** it comprises a generally cylindrical casing (35) inside which a catalytic element (36) is housed, and **in that** the integrated hydrogen-producing device (21) comprises a tube mounted inside the catalytic element and delimiting a region that acts as a burner, a fuel reforming region and a region in which the carbon monoxide produced in the reforming region is converted.

7. Device according to any one of the preceding claims, **characterized in that** it comprises a storage tank (26) for storing the produced hydrogen, mounted on the outside.

8. Device according to Claim 7, **characterized in that** it comprises a temperature sensor (57) that senses the internal temperature and sends a signal to a control unit, and an electrically-operated valve (33) controlled by the control unit for injecting into the catalytic pollution control device controlled quantities of the hydrogen-rich gaseous mixture contained in the reservoir during cold starting phases so as to heat up the device by reacting with the oxygen in the air.

9. Method of producing and using hydrogen in an on-board system of a motor vehicle equipped with an internal combustion engine (1) supplied with fuel and with air, **characterized in that** a hydrogen-rich gaseous mixture is produced by a reforming reaction performed within the device (16) for the catalytic pollution control of the exhaust gases with which the vehicle is equipped and from the fuel supplied to the vehicle engine, possibly with the addition of water, the reagents being heated and/or vaporized beforehand by exchange of heat with the exhaust gases, within the catalytic pollution control device.

10. Method according to Claim 9, **characterized in that** the temperature within the catalytic pollution control device is raised by performing a preliminary combustion of fuel mixed with air, the gases from this combustion then being treated by the catalytic pollution control device.

11. Method according to one of Claims 9 and 10, **characterized in that** at least some of the carbon monoxide produced during the reforming reaction is converted.

12. Method according to any one of the preceding claims, **characterized in that** controlled quantities of the hydrogen-rich gaseous mixture produced beforehand are injected into the catalytic pollution control device during cold start phases so as to heat up the device by reaction with the oxygen in the air.

13. Method according to any one of the preceding claims, **characterized in that** controlled quantities of the hydrogen-rich gaseous mixture produced beforehand are injected into the engine in order to improve combustion.

14. Method according to any one of the preceding claims, **characterized in that** controlled quantities of the hydrogen-rich gaseous mixture produced beforehand are injected into the catalytic pollution control device in order to improve pollution control and/or regeneration of the catalytic pollution control device.

15. Method for a vehicle equipped with a fuel cell, according to any one of the preceding claims, **characterized in that** some of the hydrogen-rich gaseous mixture produced beforehand is injected into the fuel cell.

## Patentansprüche

1. Vorrichtung zur katalytischen Reinigung der Auspuffgase eines Verbrennungsmotors (1) eines Kraftfahrzeugs, **dadurch gekennzeichnet, dass** sie eine im Inneren des Katalysators (16) angebrachte integrierte Vorrichtung (21) zur Erzeugung von Wasserstoff durch Reformierung eines kohlenwasserstoffhaltigen Kraftstoffes aufweist.

2. Vorrichtung nach Anspruch 1, **dadurch gekennzeichnet, dass** sie Mittel zum Wärmeaustausch zwischen den Abgasen und der Vorrichtung zur Erzeugung von Wasserstoff aufweist.

3. Vorrichtung nach Anspruch 1, **dadurch gekennzeichnet, dass** die Mittel zum Wärmeaustausch für die Zirkulation der Reaktanten der Reformierung zum Zwecke ihrer Erwärmung und/oder Verdampfung vor der Reformierungsreaktion eingerichtet sind.

4. Vorrichtung nach einem der vorhergehenden Ansprüche, **dadurch gekennzeichnet, dass** sie integrierte Mittel (56) zur Umwandlung von Kohlenmonoxid aufweist, die stromabwärts von der Vorrichtung zur Erzeugung von Wasserstoff angebracht sind.

5. Vorrichtung nach einem der vorhergehenden Ansprüche, **dadurch gekennzeichnet, dass** sie eine integrierte Brennervorrichtung (54) aufweist, die stromaufwärts von der Vorrichtung zur Erzeugung von Wasserstoff oder um diese herum angebracht ist.

6. Vorrichtung nach den Ansprüchen 4 und 5, **dadurch gekennzeichnet, dass** sie eine im Allgemeinen zylindrische Ummantelung (35) aufweist, in deren Innerem ein Katalysatorelement (36) angeordnet ist, und dass die integrierte Vorrichtung (21) zur Erzeugung von Wasserstoff ein Rohr aufweist, das im Inneren des Katalysatorelements angebracht ist und einen Bereich, der die Rolle eines Brenners spielt, einen Kraftstoffreformierungsbereich und einen Bereich der Umwandlung des in dem Reformierungsbereich erzeugten Kohlenmonoxids begrenzt.

7. Vorrichtung nach einem der vorhergehenden Ansprüche, **dadurch gekennzeichnet, dass** sie einen außen angebrachten Behälter (26) zur Speicherung des erzeugten Wasserstoffs aufweist.

8. Vorrichtung nach Anspruch 7, **dadurch gekennzeichnet, dass** sie einen Sensor (57) der Innentemperatur aufweist, der ein Signal an eine Steuereinheit liefert, und ein von der Steuereinheit gesteuertes Magnetventil (33) zum Einspritzen kontrollierter Mengen des in dem Behälter befindlichen wasserstoffreichen Gasgemisches in die Vorrichtung zur katalytischen Reinigung während der Kaltstartphasen, um die Vorrichtung durch Reaktion mit dem Luftsauerstoff zu erwärmen.

9. Verfahren zur Erzeugung und Verwendung von Wasserstoff in einem System, das sich an Bord eines Kraftfahrzeugs befindet, das mit einem Verbrennungsmotor (1) ausgestattet ist, dem Kraftstoff und Luft zugeführt werden, **dadurch gekennzeichnet, dass** ein wasserstoffreiches Gasgemisch hergestellt wird durch eine Reformierungsreaktion, die im Inneren der Vorrichtung (16) zur katalytischen Reinigung der Abgase, mit der das Fahrzeug ausgestattet ist, durchgeführt wird, und ausgehend von dem Kraftstoff, der dem Motor des Fahrzeugs zugeführt wird, eventuell mit Hinzufügung von Wasser, wobei die Reaktanten zuvor durch Wärmeaustausch mit den Abgasen im Inneren der Vorrichtung zur katalytischen Reinigung erwärmt und/oder verdampft werden.

10. Verfahren nach Anspruch 9, **dadurch gekennzeichnet, dass** man die im Inneren der Vorrichtung zur katalytischen Reinigung herrschende Temperatur erhöht, indem man eine Vorverbrennung von Kraftstoff in einem Gemisch mit Luft durchführt, wobei die bei dieser Verbrennung entstandenen Gase anschließend durch die Vorrichtung zur katalytischen Reinigung behandelt werden.

11. Verfahren nach einem der Ansprüche 9 oder 10, **dadurch gekennzeichnet, dass** man das Kohlenmonoxid, das bei der Reformierungsreaktion erzeugt wird, wenigstens zum Teil umwandelt.

12. Verfahren nach einem der vorhergehenden Ansprüche, **dadurch gekennzeichnet, dass** man in die Vorrichtung zur katalytischen Reinigung während der Kaltstartphasen kontrollierte Mengen des zuvor hergestellten wasserstoffreichen Gasgemisches einspritzt, um die Vorrichtung durch Reaktion mit dem Luftsauerstoff zu erwärmen.

13. Verfahren nach einem der vorhergehenden Ansprüche, **dadurch gekennzeichnet, dass** man in den Motor kontrollierte Mengen des zuvor hergestellten wasserstoffreichen Gasgemisches einspritzt, um die Verbrennung zu verbessern.

14. Verfahren nach einem der vorhergehenden Ansprüche, **dadurch gekennzeichnet, dass** man in die Vorrichtung zur katalytischen Reinigung kontrollierte Mengen des zuvor hergestellten wasserstoffreichen Gasgemisches einspritzt, um die Reinigung und/oder die Regeneration der Vorrichtung zur katalytischen Reinigung zu verbessern.

15. Verfahren für ein mit einer Brennstoffzelle ausgerüstetes Fahrzeug nach einem der vorhergehenden Ansprüche, **dadurch gekennzeichnet, dass** man in die Brennstoffzelle einen Teil des zuvor hergestellten wasserstoffreichen Gasgemisches einspritzt.
